# EUROPEAN PATENT SPECIFICATION

(11) **EP 2 610 452 B1**
(45) Date of publication and mention of the grant of the patent: **15.02.2017**
(21) Application number: 10856447.7
(22) Date of filing: 23.08.2010
(51) Int. Cl.: F01N 13/00, B01D 53/94, F01N 3/08, F01N 3/10

(54) **EXHAUST PURIFICATION SYSTEM OF INTERNAL COMBUSTION ENGINE**
ABGASREINIGUNGSSYSTEM FÜR EINEN VERBRENNUNGSMOTOR
DISPOSITIF D'ÉPURATION DE L'ÉCHAPPEMENT POUR MOTEUR À COMBUSTION INTERNE

(43) Date of publication of application: 03.07.2013
(73) Proprietor: Toyota Jidosha Kabushiki Kaisha, Toyota-shi, Aichi 471-8571 (JP)
(72) Inventor: SOBUE, Yuichi, Toyota-shi Aichi 471-8571 (JP); IMAI, Daichi, Toyota-shi Aichi 471-8571 (JP); ASANUMA, Takamitsu, Toyota-shi Aichi 471-8571 (JP); SUGAWARA, Kou, Kakegawa-shi Shizuoka 437-1492 (JP)
(74) Representative: Intès, Didier Gérard André
(86) International application number: PCT/JP2010/064655
(87) International publication number: WO 2012/026045

(56) References cited:
- WO-A1-00/27508
- WO-A1-2007/064808
- JP-A- 2002 224 573
- JP-A- 2002 355 561
- JP-A- 2005 144 253
- JP-A- 2009 165 922
- JP-A- 2009 518 162
- US-A- 5 887 422
- US-A1- 2001 043 896
- US-B1- 6 171 557

## Description

### Technical Field

The present invention relates to an exhaust purification system of an internal combustion engine.

### Background Art

Exhaust of an internal combustion engine, for example, contains carbon monoxide (CO), unburned hydrocarbons (HC), nitrogen oxides (NOₓ), particulate matter (PM), and other components. An exhaust purification system of an internal combustion engine is provided with exhaust treatment devices for removing these components. Among the components contained in exhaust, nitrogen oxides are removed by an exhaust treatment device which reduces the nitrogen oxides. The particulate matter is removed by an exhaust treatment device which traps the particulate matter. On the other hand, carbon monoxide and unburned hydrocarbons are removed by exhaust treatment devices for oxidizing these substances. For example, the engine exhaust passage has an oxidation catalyst arranged in it as an exhaust treatment device which has an oxidation function.

The oxidation catalyst has an activation temperature at which the oxidation function activates. If unburned hydrocarbons flow into the oxidation catalyst at less than the activation temperature, the unburned hydrocarbons are held by the oxidation catalyst and the oxidation catalyst falls in oxidation performance. In particular, if ethylene, propylene, or other lower olefins flow into the oxidation catalyst, the oxidation performance on the carbon monoxide falls. Therefore, at the upstream side of the oxidation catalyst, an adsorbent which adsorbs the unburned hydrocarbons is arranged. When the oxidation catalyst is less than the activation temperature, unburned hydrocarbons are kept from flowing to the oxidation catalyst.

In Japanese Patent Publication No. 7-139344 A1, an exhaust purification system which has an exhaust pipe through which exhaust from an engine flows, a catalyst which is provided in the exhaust pipe, a bypass passage which is provided at an upstream side from the catalyst in the exhaust pipe, a hydrocarbon adsorbent which is provided at the inside walls of the bypass passage, a shutoff valve which is provided in a branch passage of the exhaust pipe and bypass passage and which opens and closes the bypass passage, and control means for closing the shutoff valve when an exhaust temperature is within a predetermined temperature range is disclosed. This publication discloses use of zeolite, alumina, etc. as the hydrocarbon adsorbent which adsorbs hydrocarbons in the exhaust.

In Japanese Patent Publication No. 2007-160168 A1, an exhaust gas purification system which includes an HC adsorbent which is comprised of zeolite carrying at least one of Pd and Ag by ion exchange and an NOₓ adsorbent which is arranged at an exhaust downstream side of the HC adsorbent and which is comprised of zeolite carrying at least one type of element selected from Fe, Cu, and Co by ion exchange is disclosed. Further, this publication discloses an exhaust gas purification system which successively arranges an HC adsorbent (carrying Ag), an NOₓ adsorbent (carrying Fe), and a CO adsorbent in an exhaust system of an engine which is controlled by stoichiometric combustion control and arranges a three-way catalyst at the downstream side of that.

In addition, document WO2007/064808 describes a method for making a hydrothermally stable Ag-zeolite hydrocarbon trap for use in cold start applications. This document focuses on the material of the hydrocarbon trap.

Documents US 5,887,422, US 6,171,557 and
US 2001/043896 further disclose other similar exhaust gas purification methods and/or apparatuses for internal combustion engines.

### Citations List

### Patent Literature

PLT 1: Japanese Patent Publication No. 7-139344 A1
PLT 2: Japanese Patent Publication No. 2007-160168 A1
PLT 3: Japanese Patent Publication No. 7-96178 A1
PLT 4: Japanese Patent Publication No. 2006-21153 A1
PLT 5: Japanese Patent Publication No. 2000-185232 A1
PLT 6: Japanese Patent Publication No. 2003-284956 A1

### Summary of Invention

### Technical Problem

By arranging an adsorbent which adsorbs unburned hydrocarbons in an engine exhaust passage at an upstream side of an oxidation catalyst, it is possible to hold the unburned hydrocarbons when the oxidation catalyst is low in temperature. In this regard, the inventors engaged in research and as a result learned that under specific conditions, the unburned hydrocarbons which are adsorbed at the adsorbent undergo coking whereby the absorption ability of the adsorbent falls. If the adsorption ability of the adsorbent falls, the unburned hydrocarbons which slip through the adsorbent will gradually increase. For this reason, the performance in suppressing the inflow of unburned hydrocarbons into the oxidation catalyst will fall.

Here, "coking" is a reaction where under predetermined operating conditions (for example, under operating conditions where the adsorbent is exposed to a temperature region of approximately 200°C to approximately 300°C for a predetermined time), the unburned hydrocarbons which are adsorbed at the adsorbent undergo a dehydrogenation reaction and change to carbon. "Coking" includes reactions where the hydrocarbons which are adsorbed at the adsorbent polymerize whereby polymerized hydrocarbons are produced. Further, "coking" includes reactions where the polymerized hydrocarbons undergo a dehydrogenation reaction and change to carbon.

The carbon components which are produced by coking, that is, the polymerized hydrocarbons and carbon, are harder to remove by desorption or burning compared with ordinary adsorbed unburned hydrocarbons (at which no coking has occurred). The carbon components which are produced by coking end up remaining without being removed even if ordinary treatment is performed to remove the adsorbed unburned hydrocarbons. For this reason, once coking ends up occurring, the adsorbable sites of the adsorbent end up being occupied by the polymerized hydrocarbons or carbon produced by the coking. The adsorption sites which can adsorb new unburned hydrocarbons decrease, so the performance of the adsorbent in adsorbing unburned hydrocarbons falls.

The present invention has as its object the provision of an exhaust purification system of an internal combustion engine which is provided with an adsorption part which adsorbs hydrocarbons and which suppresses coking at the hydrocarbons which are adsorbed at the adsorption part.

### Solution to Problem

The internal combustion engine of the present invention is a compression ignition type internal combustion engine as defined by claim 1.

Accordingly in this engine, the electronic control unit is configured to control the engine body so as to have, in ordinary operation of the internal combustion engine, periods where the adsorption part is maintained in a first temperature range where the hydrocarbons which are adsorbed at the adsorption part undergo coking and for a time required for coking to occur, and periods where a temperature of the adsorption part is maintained at a second temperature range which is higher than the first temperature range.

In this embodiment, an upper limit temperature of the first temperature range can be less than approximately 400°C and a lower limit temperature of the second temperature range can be approximately 400°C or more.

In an embodiment of the internal combustion engine of the present invention, the oxidation part can be arranged in an engine exhaust passage at a downstream side from the adsorption part.

In an embodiment of the internal combustion engine of the present invention, the adsorption part and the oxidation part can be stacked on a surface of a base member, and the oxidation part and the adsorption part can be stacked from the surface of the base member toward a flow path of the exhaust in the order of the oxidation part and the adsorption part.

### Advantageous Effects of Invention

According to the present invention, it is possible to provide an exhaust purification system of an internal combustion engine which is provided with an adsorption part which adsorbs hydrocarbons and which suppresses coking at the hydrocarbons which are adsorbed at the adsorption part.

### Brief Description of Drawings

FIG. 1 is a schematic view of an internal combustion engine in an embodiment.
FIG. 2 is a schematic cross-sectional view of a first exhaust treatment device in the embodiment.
FIG. 3 is an enlarged schematic cross-sectional view of the first exhaust treatment device in the embodiment.
FIG. 4 is an enlarged schematic cross-sectional view which explains hydrocarbons which are adsorbed at an adsorbent and carbon which is produced by coking.
FIG. 5 is a graph which explains a relationship between a concentration of unburned hydrocarbons which flow into an oxidation part and a rate of removal of carbon monoxide.
FIG. 6 is an explanatory view of temperature ranges in an adsorption part where adsorption, coking, and desorption (or combustion) occur.
FIG. 7 is an enlarged schematic cross-sectional view of a second exhaust treatment device in the embodiment.
FIG. 8 is an enlarged schematic cross-sectional view of a third exhaust treatment device in the embodiment.
FIG. 9 is a graph of amounts of adsorption of propylene by an adsorbent of Example 1 and adsorbents of comparative examples.
FIG. 10 is a graph of purification rates of carbon monoxide of an exhaust treatment device of Example 2 and exhaust treatment devices of comparative examples.
FIG. 11 is a graph of amounts of adsorption of propylene by an adsorbent of Example 3 and adsorbents of comparative examples.

### Description of Embodiments

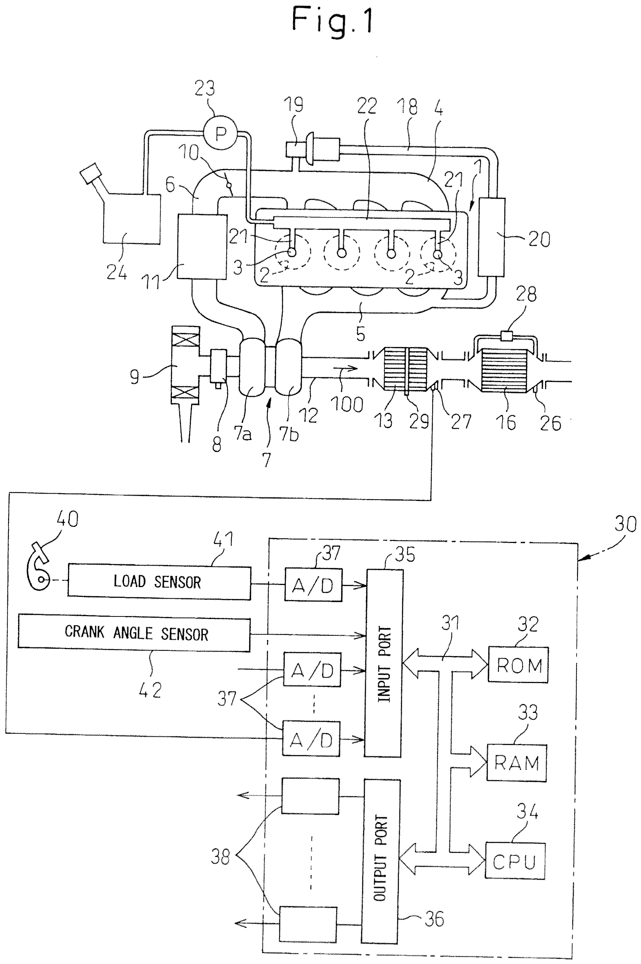

Referring to FIG. 1 to FIG. 11, an exhaust purification system of an internal combustion engine in an embodiment will be explained. The internal combustion engine in the present embodiment is mounted in a vehicle. In the present embodiment, the explanation will be given with reference to the example of a compression ignition type of diesel engine.

FIG. 1 shows a schematic view of an internal combustion engine in the present embodiment. The internal combustion engine is provided with an engine body 1. Further, the internal combustion engine is provided with an exhaust purification system which purifies exhaust which is exhausted from the engine body 1. The engine body 1 includes combustion chambers 2 as cylinders, electronic control type fuel injectors 3 which inject fuel into the respective combustion chambers 2, an intake manifold 4, and an exhaust manifold 5.

The intake manifold 4 is connected through an intake duct 6 to an outlet of a compressor 7a of an exhaust turbocharger 7. The inlet of the compressor 7a is connected through an intake air detector 8 to an air cleaner 9. Inside the intake duct 6, a throttle valve 10 which is driven by a step motor is arranged. Further, in the intake duct 6, a cooling device 11 for cooling the intake air which flows through the inside of the intake duct 6 is arranged. In the example which is shown in FIG. 1, engine cooling water is led to the cooling device 11. The engine cooling water is used to cool the intake air.

The exhaust manifold 5 is connected to an inlet of an exhaust turbine 7b of the exhaust turbocharger 7. The exhaust purification system in the present embodiment is provided with a first exhaust treatment device 13 for purification by oxidizing unburned fuel (unburned hydrocarbons) and carbon monoxide and other substances which are exhausted from the engine body 1. The first exhaust treatment device 13 is connected to an outlet of the exhaust turbine 7b through an exhaust pipe 12. Inside of the engine exhaust passage downstream of the first exhaust treatment device 13, a particulate filter 16 for trapping particulate matter in the exhaust is arranged. The exhaust flows along the engine exhaust passage as shown by the arrows 100.

Between the exhaust manifold 5 and the intake manifold 4, an exhaust gas recirculation (EGR) passage 18 is arranged for EGR. In the EGR passage 18, an electronic control type EGR control valve 19 is arranged. Further, in the EGR passage 18, a cooling device 20 for cooling the EGR gas which flows through the inside of the EGR passage 18 is arranged. In the example which is shown in FIG. 1, engine cooling water is guided to the inside of the cooling device 20. The engine cooling water is used to cool the EGR gas.

The respective fuel injectors 3 are connected through fuel feed pipes 21 to a common rail 22. The common rail 22 is connected through an electronic control type variable discharge fuel pump 23 to a fuel tank 24. The fuel which is stored in the fuel tank 24 is fed by the fuel pump 23 to the inside of the common rail 22. The fuel which is fed into the common rail 22 is fed through the respective fuel feed pipes 21 to the fuel injectors

The electronic control unit 30 includes a digital computer. The electronic control unit 30 includes components which are connected to each other by a bidirectional bus 31 such as a ROM (read only memory) 32, RAM (random access memory) 33, CPU (microprocessor) 34, input port 35, and output port 36.

The ROM 32 is a storage device for read only operations. The ROM 32 stores maps and other information necessary for control in advance. The CPU 34 can perform any processing or judgment. The RAM 33 is a storage device for random access operations. The RAM 33 can store operational history and other information or temporarily store processing results.

Downstream of the particulate filter 16, a temperature sensor 26 for detecting the temperature of the particulate filter 16 is arranged. At the particulate filter 16, a differential pressure sensor 28 for detecting a differential pressure before and after the particulate filter 16 is attached. The output signals of these temperature sensor 26, differential pressure sensor 28, and intake air detector 8 are input through corresponding AD converters 37 to the input port 35.

An accelerator pedal 40 is connected to a load sensor 41 which generates an output voltage which is proportional to an amount of depression of the accelerator pedal 40. The output signal of the load sensor 41 is input through a corresponding AD converter 37 to the input port 35. Further, the input port 35 is connected to a crank angle sensor 42 which generates an output pulse every time a crank shaft rotates by for example 15°. From the output of the crank angle sensor 42, it is possible to detect the speed of the engine body 1.

On the other hand, the output port 36 is connected through corresponding drive circuits 38 to the fuel injectors 3, the step motor for driving the throttle valve 10, the EGR control valve 19, and the fuel pump 23. In this way, the fuel injectors 3 and the throttle valve 10 etc. are controlled by the electronic control unit 30.

The particulate filter 16 is a filter which removes fine carbon particles which are contained in exhaust, fine particles of sulfates and other ions, and other particulate matter. The particulate filter, for example, has a honeycomb structure and has a plurality of flow paths which extend in the direction of flow of the gas. In the plurality of flow paths, flow paths which have sealed bottom ends and flow paths which have sealed top ends are alternately formed. The partition walls of the flow paths are formed by porous materials such as cordierite. Particulate matter is trapped when exhaust gas passes through the partition walls. The particulate matter which gradually builds up at the particulate filter 16 is removed by being oxidized by raising the temperature in an excess air atmosphere.

The exhaust purification system of an internal combustion engine in the present embodiment is provided with not only the first exhaust treatment device 13, but also the particulate filter 13, but the invention is not limited to this. It is also possible to arrange another exhaust treatment device in addition to the first exhaust treatment device 13. The exhaust purification system may also be provided with an exhaust treatment device which removes the NOₓ which is contained in the exhaust. For example, an NOₓ storage reducing catalyst (NSR) can be arranged between the first exhaust treatment device 13 and the particulate filter 16. In the present invention, the ratio of the air and fuel (hydrocarbons) in the exhaust which is supplied to the engine intake passage, combustion chambers, or engine exhaust passage will be referred to as "the air-fuel ratio of the exhaust (A/F)". The NOₓ storage reducing catalyst (NSR) holds the NOₓ which is contained in the exhaust when the air-fuel ratio of the exhaust is lean (when it is larger than the stoichiometric air-fuel ratio). As opposed to this, when the air-fuel ratio of the exhaust is rich or when the stoichiometric air-fuel ratio is reached, NOₓ is released. The released NOₓ is reduced to N₂ by the unburned fuel, carbon monoxide, etc. which are contained in the exhaust.

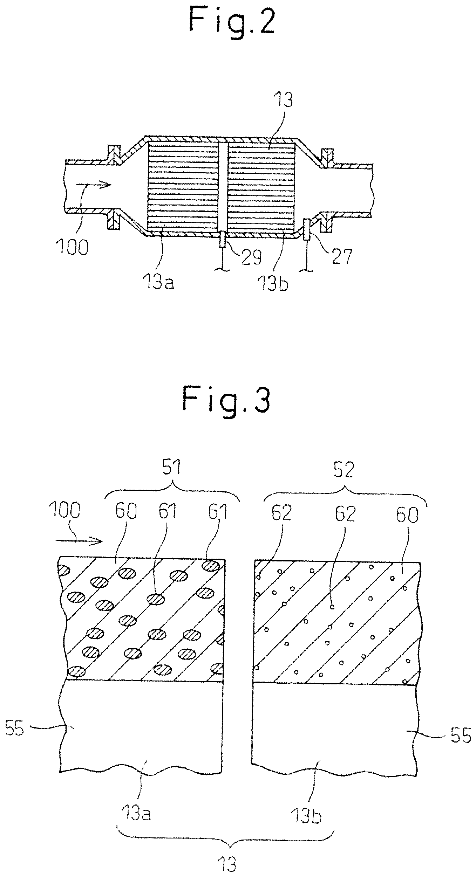

FIG. 2 is a schematic cross-sectional view of a first exhaust treatment device in the present embodiment. The first exhaust treatment device 13 in the present embodiment has a plurality of passages along the direction of flow of the exhaust. The first exhaust treatment device 13 is split in the middle of the direction of flow of the exhaust. The first exhaust treatment device 13 includes an adsorbent 13a for adsorption of unburned hydrocarbons and an oxidation catalyst 13b for oxidation of the unburned hydrocarbons and carbon monoxide. Between the adsorbent 13a and the oxidation catalyst 13b, a temperature sensor 29 is arranged for detecting the temperature of the adsorbent 13a. Further, downstream of the oxidation catalyst 13b, a temperature sensor 27 is arranged for detecting the temperature of the oxidation catalyst 13b. The output signals of these temperature sensors 27, 29 are respectively input through AD converters 37 of the electronic control unit 30 to the input port 35.

FIG. 3 shows an enlarged schematic cross-sectional view of the first exhaust treatment device in the present embodiment. FIG. 3 is an enlarged schematic cross-sectional view of the part at the boundary of the adsorbent 13a and the oxidation catalyst 13b. The adsorbent part 13a and the oxidation catalyst 13b are respectively provided with base members 55. The base members 55 in the present embodiment have pluralities of flow paths and are formed into honeycomb structures. The base members 55 are, for example, formed by cordierite or SiC or other monolithic base members.

At the surface of the base member 55 of the adsorbent 13a, an adsorption part 51 is formed. The adsorption part 51 is formed at the plurality of flow paths of the base member 55. The adsorption part 51 is formed in a layer shape along the engine exhaust passage. The adsorption part 51 has the function of adsorbing unburned hydrocarbons. The adsorption part 51 in the present invention includes the carrier 60 and zeolite particles 61. The zeolite particles 61 in the present embodiment include beta zeolite on which silver is carried by ion exchange or ZSM-5 on which silver is carried by ion exchange. The carrier 60 includes, for example, aluminum oxide (alumina: Al₂O₃) or other porous oxide powder.

At the surface of the base member 55 of the oxidation catalyst 13b, an oxidation part 52 is formed. The oxidation part 52 is formed at the plurality of flow paths of the base member 55. The oxidation part 52 is formed in a layer shape along the engine exhaust passage. The oxidation part 52 has the function of oxidizing the unburned hydrocarbons and carbon monoxide etc. The oxidation part 52 of the first exhaust treatment device 13 includes a carrier 60 and catalyst particles 62. The carrier 60 is fastened to the base member 44 by a binder. The catalyst particles 62 are carried at the carrier 60. The catalyst particles 62 are metal particles for oxidizing the substances to be oxidized contained in the exhaust.

The catalyst particles 62 in the present embodiment are formed from precious metals. As the catalyst particles 62, platinum group metals (PGM) may be used. The catalyst particles 62 can, for example, use at least one precious metal among platinum Pt, palladium Pd, and rhodium Rh. Alternatively, the catalyst particles can contain any metals which have oxidizing abilities.

In the first exhaust treatment device of the present embodiment, the adsorbent 13a is arranged at the upstream side in the engine exhaust passage, while the oxidation catalyst 13b is arranged at the downstream side. The absorbent 13a and oxidation catalyst 13b are arranged so that the exhaust contacts the adsorption part 51, then contacts the oxidation part 52. In the present embodiment, the base member 55 is split whereby the adsorbent and oxidation catalyst are formed, but the invention is not limited to this. The base member may also be integrally formed. That is, the absorption part may be formed on the surface of a single base member at the upstream side along the direction of flow of the exhaust gas, while the oxidation part may be formed at the downstream side.

The oxidation catalyst has the property of not exhibiting a sufficient oxidation reaction at less than a predetermined activation temperature and of exhibiting a sufficient oxidation reaction at the predetermined activation temperature or more. That is, the oxidation catalyst has an activation temperature at which a predetermined purification rate can be achieved. At the time of cold start or otherwise when the oxidation catalyst is at less than the activation temperature, the inflowing carbon monoxide or unburned hydrocarbons are not sufficiently oxidized and slip through the oxidation catalyst. For this reason, at the upstream side of the oxidation catalyst, an adsorbent is arranged which adsorbs unburned hydrocarbons at less than a predetermined temperature.

The first exhaust treatment device 13 which oxidizes substances to be oxidized in the present embodiment adsorbs unburned hydrocarbons at the adsorption part 51 when the exhaust is low in temperature. For example, when the temperature of the adsorption part 51 is less than the release temperature of unburned hydrocarbons, it adsorbs the unburned hydrocarbons. If the temperature of the exhaust rises, the adsorption part 51 releases the adsorbed hydrocarbons. For example, it releases hydrocarbons when the temperature of the adsorption part 51 becomes the release temperature of unburned hydrocarbons or more. On the other hand, the oxidation part 52 exhibits a sufficient oxidation function when the temperature rises and, for example, becomes the activation temperature or more. The released hydrocarbons are removed by oxidation at the oxidation part 52. Further, the carbon monoxide which flows into the exhaust treatment device is oxidized at the oxidation part 52. The carbon monoxide and unburned hydrocarbons which are contained in the exhaust are oxidized in this way, whereby they are converted to water or carbon dioxide.

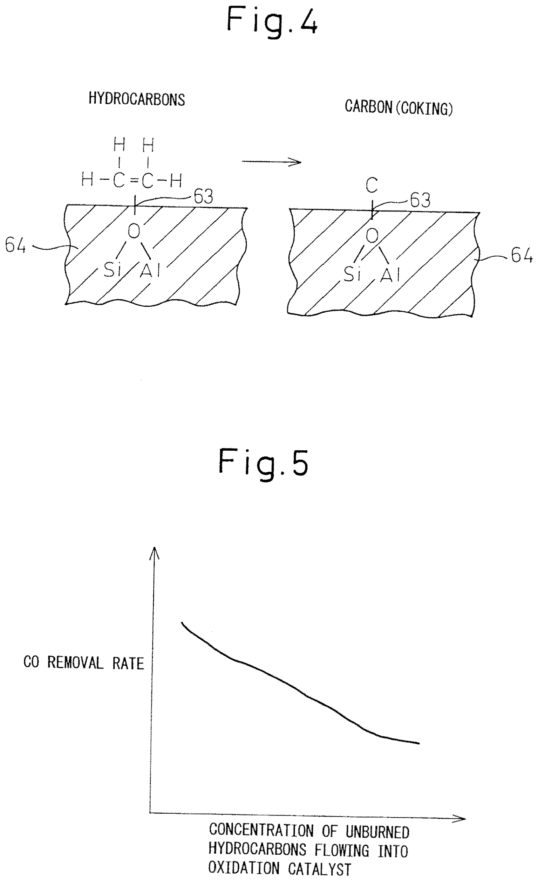

FIG. 4 is an enlarged schematic cross-sectional view which explains the mode when the adsorbent holds unburned hydrocarbons. In the temperature range where the adsorption part adsorbs unburned hydrocarbons, if unburned hydrocarbons flow into the adsorption part, the adsorption part holds them in the form of hydrocarbons. The hydrocarbons are, for example, adsorbed at the acid points 63 of the zeolite 64. In this regard, after the elapse of a predetermined time at a predetermined temperature range, coking occurs whereby the hydrocarbons are finally converted to carbon.

More specifically, one hydrocarbon which was held at the adsorption part is polymerized with another hydrocarbon resulting in hydrocarbons which are polymerized (hereinafter referred to as "polymerized hydrocarbons,"). The molecular weight of one hydrocarbon which is held at the adsorption part increases. In this case, the carbon components are held at the adsorption part in the form of polymerized hydrocarbons.

Further, if coking progresses, a dehydrogenation reaction will occur at the polymerized hydrocarbons resulting in a change to the form of carbon. In this case, the carbon components are held in the form of carbon at the adsorption part. In this way, the carbon components which are produced due to coking include polymerized hydrocarbons and carbon. The hydrocarbons which are held at the adsorption part undergo coking as a result of which they are held at the acid points 63 of the zeolite 64 in the form of polymerized hydrocarbons or carbon.

The carbon components which are produced by the coking (polymerized hydrocarbons and carbon) are not released except at a temperature higher than the temperature at which the hydrocarbons are released before polymerization (unburned hydrocarbons when adsorbed), so have the property of easily building up at the adsorption part. If the carbon components which are produced by coking at the adsorption part build up, the amount of unburned hydrocarbons which can be adsorbed, the adsorption rate, etc. will decrease. That is, the adsorption ability of the adsorption part will fall.

If the adsorption ability at the adsorption part falls, when the adsorption part and the oxidation part are low in temperature, the unburned hydrocarbons which slip through the adsorption part increase. If the unburned hydrocarbons which slip through the adsorption part increase, the purification rate of the unburned hydrocarbons which are exhausted from the engine body deteriorates. Further, if the adsorption ability of the adsorption part falls, sometimes this will have a detrimental effect on the rate of removal of carbon monoxide at the oxidation catalyst.

FIG. 5 shows a graph which explains the relationship between the concentration of unburned hydrocarbons which flow into the oxidation part and the rate of removal of carbon monoxide. The abscissa shows the concentration of unburned hydrocarbons which flow into the oxidation catalyst. In the present embodiment, this corresponds to the concentration of unburned hydrocarbons which slip through the adsorption part. The ordinate shows the rate of removal of carbon monoxide at the oxidation catalyst. The graph of FIG. 5 shows the results of tests carried out at a temperature where the hydrocarbons cannot be sufficiently oxidized, but carbon monoxide can be oxidized. It is learned that the larger the concentration of unburned hydrocarbons which flow into the oxidation catalyst, that is, the larger the concentration of unburned hydrocarbons which slip through the adsorption part, the smaller the rate of removal of carbon monoxide.

In the unburned hydrocarbons which are contained in the exhaust, ethylene, propylene, and other lower olefins have the property of being easily held at the catalyst particles when flowing into the oxidation catalyst. For this reason, lower olefins obstruct the oxidation reaction of carbon monoxide at the oxidation catalyst. For example, propylene etc. are strong in effect of obstructing the oxidation reaction of carbon monoxide at the oxidation catalyst. Lower olefins are suitably adsorbed at the acid points of the zeolite at the adsorption part. In this regard, if the carbon components which are produced due to coking are held at the acid points, the ability of the adsorption part to adsorb lower olefins becomes smaller. If the adsorption part holds a large amount of carbon components which are produced due to coking, the amount of lower olefins which slip through the adsorption part will increase. As a result, a large amount of lower olefins will flow into the oxidation catalyst and the rate of removal of carbon monoxide at the oxidation catalyst will fall.

In this regard, in recent years, improvement of the properties of exhaust of internal combustion engines has been studied. For example, to reduce the amount of carbon dioxide which is contained in the exhaust, improvement of the heat efficiency etc. have been sought. Along with the improvement in the properties of the exhaust, the amount of consumption of fuel has become smaller. If the amount of consumption of fuel becomes smaller, the temperature of the exhaust which is discharged from the engine body will become lower. In such an internal combustion engine, along with the drop in the temperature of the exhaust, sometimes the temperature of the adsorption part will not sufficiently rise during the period of ordinary operation.

In particular, the temperature of the exhaust of a compression ignition type of internal combustion engine is lower than the temperature of the exhaust of a spark ignition type of internal combustion engine, so the temperature of the adsorption part sometimes will not sufficiently rise. Furthermore, if the adsorption part is arranged away from the engine body, the temperature of the adsorption part sometimes will not sufficiently rise. For example, in an automobile, when the engine body is placed at the front of the vehicle, the adsorption part is placed on the underside of the floor panel, and the engine body and the adsorption part are connected by a long exhaust pipe, the temperature of the adsorption part sometimes will not sufficiently rise.

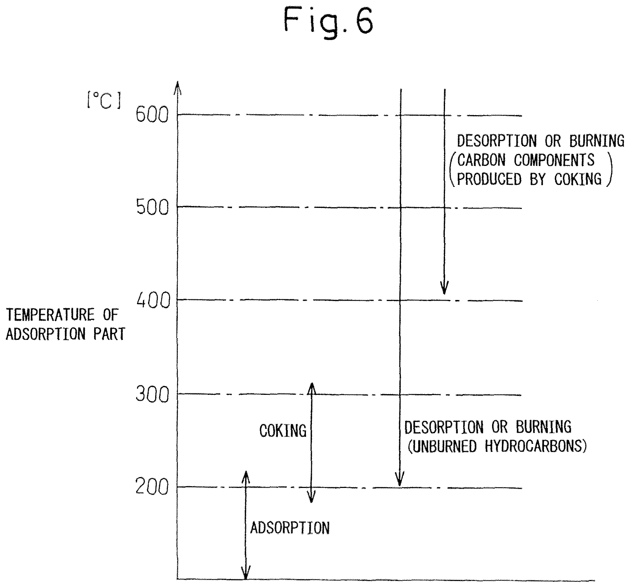

FIG. 6 is a view which explains the phenomenon which occurs at the adsorption part of the exhaust purification system in the present embodiment. The ordinate shows the temperature of the adsorption part. In accordance with the temperature of the adsorption part, adsorption and coking of the unburned hydrocarbons, desorption or burning of the unburned hydrocarbons, and desorption or burning of the carbon components which are produced by coking occur.

As the release temperature of the unburned hydrocarbons of the adsorption part, approximately 200°C can be considered. The adsorption part adsorbs the unburned hydrocarbons which are contained in the exhaust at less than approximately 200°C in temperature range. The adsorption part releases the adsorbed unburned hydrocarbons at approximately 200°C or more in temperature range. If the adsorption part reaches approximately 200°C or more, the hydrocarbons are desorbed or burned before polymerization.

The temperature range of the adsorption part at which coking occurs can be considered as being approximately 200°C to approximately 300°C. Further, as the temperature range at which the carbon components which have been produced by the coking desorb or burn, approximately 400°C or more can be considered.

For example, when stopping an internal combustion engine for a long period of time, then cold starting it, an engine warmup operation is performed. At the engine warmup operation, the temperature of the adsorption part is in the temperature region of less than approximately 200°C. The adsorption part has a high adsorption ability at such a low temperature region. The adsorption part holds the unburned hydrocarbons which are contained in the exhaust by adsorption. Further, the temperature of the adsorption part is low, so it is hard for coking of the unburned hydrocarbons which are held at the adsorption part to occur in this state.

If the temperature of the engine body rises, engine warmup operation ends. During the period of ordinary operation of an internal combustion engine, the temperature of the exhaust changes depending on the size of the load etc. Here, in the present invention, "ordinary operation" means operation based on the demanded load of the internal combustion engine. Operation where the temperature of the exhaust is made to rise for predetermined control regardless of the demanded load of the internal combustion engine is excluded from ordinary operation. For example, operation for raising the exhaust temperature for regeneration of the particulate filter, operation for raising the exhaust temperature for reversal of sulfur poisoning of the NOₓ storage reducing catalyst etc. are excluded from ordinary operation.

If the internal combustion engine in the present embodiment continues ordinary operation, the temperature of the adsorption part will be maintained in a temperature range of approximately 150°C to less than approximately 350°C. When the internal combustion engine is operating under a low load, the temperature becomes a low one in this temperature range, while when it is operating under a high load, the temperature becomes a high one in this temperature range.

In ordinary operation of the combustion engine of the present embodiment, there is a period in which the adsorption part is held in the temperature range where coking occurs (approximately 200°C to approximately 300°C). In order for coking to occur, a predetermined time is required, so for example, coking does not substantially occur if the adsorption part reaches a temperature within the temperature range where coking occurs for an instant. In the internal combustion engine in the present embodiment, the temperature of the adsorption part is maintained in the temperature range where coking occurs for the time period for coking to occur. The unburned hydrocarbons which are held at the adsorption part undergo coking whereby polymerized hydrocarbons and carbon are produced. The amount of held carbon components produced due to coking increases.

Note that the adsorption part of the exhaust purification system in the present embodiment sometimes desorbs the adsorbed unburned hydrocarbons in the temperature range in which coking occurs. Coking does not occur when all of the unburned hydrocarbons which are adsorbed at the adsorption part are desorbed.

While the internal combustion engine in the present embodiment is engaged in ordinary operation, the temperature of the adsorption part never reaches a temperature at which carbon components which are produced due to coking are released. If continuing ordinary operation, the carbon components which are produced due to coking build up. For example, when the internal combustion engine is operating under a low load, the temperature of the absorption part becomes less than the release temperature of unburned hydrocarbons and unburned hydrocarbons are adsorbed at the adsorption part. After that, if the load of the internal combustion engine and the temperature of the adsorption part is held in the temperature range in which coking occurs, coking will occur. In this way, the carbon components which are produced due to coking build up at the adsorption part.

On the other hand, in an exhaust purification system of an internal combustion engine in which the adsorption part reaches a sufficiently high temperature while performing ordinary operation, it is hard for the carbon components which are produced due to coking to build up at the adsorption part. For example, in an internal combustion engine in which, during ordinary operation, the temperature of the adsorption part is maintained at a temperature higher than approximately 300°C, the adsorption part is maintained at a temperature higher than the temperature range where coking occurs, so it is hard for coking to occur. Furthermore, much of the unburned hydrocarbons which are held at the adsorption part will desorb or burn. Coking takes time, so a large amount of unburned hydrocarbons will desorb before coking occurs. For this reason, in an exhaust purification system where the adsorption part becomes sufficiently high in temperature, there is the property that it is hard for carbon to build up at the adsorption part.

Furthermore, in an internal combustion engine in which, in ordinary operation, the temperature of the adsorption part becomes higher than approximately 400°C, the carbon components which are produced due to coking will desorb or burn, so there is the property that it will be hard for the carbon components which are produced due to coking to build up at the adsorption part.

If, in this way, the temperature of the exhaust which is discharged from the engine body becomes high or the adsorption part is arranged near the engine body, the temperature of the exhaust which flows into the adsorption part will become higher. During ordinary operation, the temperature of the adsorption part is maintained at a temperature higher than the temperature range at which coking occurs, so it becomes hard for coking to occur. As opposed to this, in ordinary operation of the internal combustion engine in the present embodiment, there is a time period during which the temperature of the adsorption part is maintained within the temperature range where coking occurs. Coking occurs at the unburned hydrocarbons which are held at the adsorption part and polymerized hydrocarbons and carbon build up. In the exhaust purification system of the internal combustion engine in the present embodiment, the carbon components which are held at the adsorption part contain carbon components which are produced due to coking.

In the exhaust purification system of the present embodiment, the carbon components which are produced due to coking can, for example, be released by raising the temperature of the adsorption part to the release temperature of the carbon components which are produced due to coking or more. For example, they are released when raising the temperature of the exhaust for regenerating the particulate filter or otherwise.

The inventors of the present application discovered that by including at least one zeolite among beta zeolite which carries silver by ion exchange and ZSM-5 which carries silver by ion exchange at the adsorption part at which the carbon components which are produced due to coking build up, it is possible to greatly suppress the drop in performance of the adsorption part due to coking.

By having the adsorption part include beta zeolite which carries silver by ion exchange, it is possible to greatly suppress the occurrence of coking at the adsorption part. Beta zeolite has acid points acting as starting points of coking. By ion exchange of beta zeolite by silver, the acid strength is made to fall and occurrence of coking can be suppressed. Therefore, it is possible to greatly suppress the drop in the amount of adsorption of unburned hydrocarbons at the adsorption part. In particular, it is possible to greatly suppress the drop in the amount of adsorption of lower olefins in unburned hydrocarbons. For this reason, it is possible to suppress a drop in the rate of removal of carbon monoxide at the oxidation part.

Further, in the same way as beta zeolite, by having the adsorption part include ZSM-5 which carries silver by ion exchange, it is possible to greatly suppress the occurrence of coking at the adsorption part and possible to suppress the drop in the rate of removal of carbon monoxide at the oxidation part.

In the internal combustion engine in the present embodiment, in ordinary operation, there is a time period during which the adsorption part is maintained in the temperature range at which the adsorbed unburned hydrocarbons undergo coking for the time for coking to occur. That is, it operates under operating conditions where coking occurs in the hydrocarbons which are adsorbed at the adsorption part. During this period, the unburned hydrocarbons are changed to polymerized hydrocarbons and carbon due to coking. For example, there is a time period during which the temperature of the adsorption part changes within the temperature range at which coking occurs. The engine continues operating while the adsorption part is maintained in the temperature range at which coking occurs. In such an exhaust purification system, coking easily occurs at the unburned hydrocarbons which are held at the adsorption part, so the effect of suppressing a drop in performance of the adsorption part in the present invention becomes remarkable.

Further, referring to FIG. 6, in an exhaust purification system in which the temperature of the adsorption part during ordinary operation becomes within a temperature range of approximately 400°C or less, it is hard for the carbon components which are produced due to coking to desorb, so the carbon components which are produced due to coking easily build up. In this exhaust purification system, the effect of suppression of the drop in performance at the adsorption part becomes remarkable. Furthermore, in an exhaust purification system where the temperature of the adsorption part during ordinary operation becomes within a temperature range of approximately 300°C or less, the time period where the engine is operated in the temperature range where coking occurs becomes longer, so coking more easily occurs. In this exhaust purification system, the effect of suppression of the drop in performance of the adsorption part of the present invention becomes more remarkable.

Further, in the exhaust purification system in the present embodiment, the adsorption part, in ordinary operation, repeatedly becomes a temperature within the temperature range where coking occurs and a temperature within the temperature where the adsorption part adsorbs unburned hydrocarbons. For example, the temperature of the adsorption part repeatedly becomes a temperature within the temperature range of approximately 200°C to approximately 300°C and a temperature within the temperature range of less than approximately 200°C. When the temperature of the adsorption part in within the temperature range of approximately 200°C to approximately 300°C, the carbon components which are produced due to coking build up and the adsorption performance of the adsorption part falls. Part of the hydrocarbons which are held at the adsorption part are desorbed, but the temperature of the adsorption part becomes less than approximately 200°C, whereby new unburned hydrocarbons are held at the adsorption part. If repeating the adsorption and coking of unburned hydrocarbons, the adsorption ability of the adsorption part greatly falls.

Further, since the adsorption ability of the adsorption part falls, the rate of removal of carbon monoxide at the oxidation part falls. In this way, in an exhaust purification system which repeats occurrence of coking and adsorption of unburned hydrocarbons in ordinary operation, the effect of suppression of the drop in performance of the adsorption part in the present invention becomes remarkable.

In this regard, as the temperature range of the adsorption part, it is possible to set a first temperature range as a temperature range in which there is a possibility of unburned hydrocarbons being adsorbed and coking occurring. Further, it is possible to set a second temperature range as a temperature range which is higher than the first temperature range and in which adsorbed unburned hydrocarbons and carbon components which are produced due to coking desorb or burn. The first temperature range can, for example, be set to a temperature range with an upper limit temperature of less than approximately 400°C. Further, the second temperature range can, for example, be set to a temperature range with a lower limit temperature of approximately 400°C or more.

In ordinary operation of the internal combustion engine, there are preferably time periods where the adsorption part is maintained at the first temperature range and at the second temperature range. By having the adsorption part maintained at the first temperature range, the unburned hydrocarbons in the exhaust can be adsorbed. Further, even if coking occurs and hydrocarbons are polymerized or change to carbon during the time period in which it is maintained at the first temperature range, since there is a time period in which it is maintained at the second temperature range, the adsorbed unburned hydrocarbons can be desorbed or burned and the polymerized hydrocarbons and carbon can also be desorbed or burned. In this way, the carbon components which are produced due to coking can be kept from building up at the adsorption part.

Further, the drop in the adsorption ability of the adsorption part includes not only a drop in the adsorption ability due to coking of the unburned hydrocarbons, but also a drop in adsorption ability due to the sulfur component which is contained in the exhaust. Fuel contains a sulfur component, so the exhaust contains a sulfur component. By having the adsorption part include beta zeolite carrying silver by ion exchange or ZSM-5 carrying silver by ion exchange, it is possible to suppress a drop in adsorption ability due to the sulfur component which is contained in the exhaust.

The adsorption part in the present embodiment is shown as including beta zeolite carrying silver by ion exchange or ZSM-5 carrying silver by ion exchange as an example, but the invention is not limited to this. The adsorption part may also contain both beta zeolite carrying silver by ion exchange and ZSM-5 carrying silver by ion exchange.

In the first exhaust treatment device of the present embodiment, an adsorption part is arranged at the upstream side and an oxidation part is arranged at the downstream side of the adsorption part, but the invention is not limited to this. The adsorption part and the oxidation part need only be formed so that the exhaust passes through the adsorption part, then flows into the oxidation part. Alternatively, the adsorption part and the oxidation part may be formed integrally.

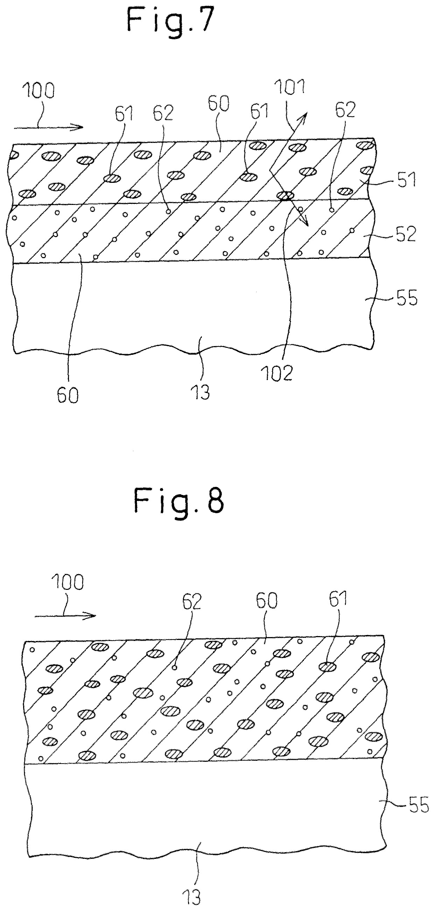

FIG. 7 shows an enlarged schematic cross-sectional view of a second exhaust treatment device in the present embodiment. The second exhaust treatment device is comprised of a base member 55 which is formed by cordierite etc. on the surface of which an adsorption part 51 and oxidation part 52 are formed in the form of layers. The oxidation part 52 is placed on the surface of the base member 55, while the adsorption part 51 is placed on the surface of the oxidation part 52. In the second exhaust treatment device, the exhaust passes through the adsorption part 51, then flows into the oxidation part 52. The adsorption part 51 and the oxidation part 52 are stacked from the surface of the base member 55 toward the flow path of the exhaust in the order of the oxidation part 52 and the adsorption part 51.

In the second exhaust treatment device of the present embodiment, the exhaust, as shown by the arrow 100, flows over the surface of the adsorption part 51. The exhaust first flows into the adsorption part 51. When the temperature of the adsorption part 51 is less than the release temperature of the unburned hydrocarbons, the exhaust flows into the adsorption part 51 whereby the unburned hydrocarbons are held at the adsorption part 51.

When the temperature of the adsorbent 13a is less than the release temperature of the unburned hydrocarbons, the unburned hydrocarbon which could not be adsorbed at the adsorption part 51, as shown by the arrow 101, sometimes returns to the flow path of the exhaust and sometimes flows into the oxidation part 52. In the first exhaust treatment device of the present embodiment, all of the exhaust which flows out from the adsorbent 13a flows into the oxidation catalyst 13b. For this reason, the possibility rises of the unburned hydrocarbons which flow out from the adsorbent 13a ending up being adsorbed at the oxidation part 52 of the oxidation catalyst 13b. For example, the possibility rises of the lower olefins ending up being held at the oxidation part 52.

As opposed to this, in the second exhaust treatment device, the unburned hydrocarbons which flow out from the adsorption part 51 sometimes flow into the oxidation part 52 and sometimes return to the flow path of the exhaust. For this reason, the possibility of the unburned hydrocarbons flowing into the oxidation part 52 and being held at the oxidation part 52 can be reduced. A drop in the oxidizing ability of the oxidation part 52 can therefore be suppressed.

Further, in the oxidation part 52, gas flows inside the pores. The oxidation part 52 becomes higher in internal pressure than the flow path of the exhaust. For this reason, the possibility becomes higher of the unburned hydrocarbons which could not be adsorbed at the adsorption part 51 flowing out to the engine exhaust passage rather than flowing into the oxidation part 52. For this reason, when the adsorption part 51 is at less than the release temperature of the unburned hydrocarbons, the unburned hydrocarbons can be kept from passing through the adsorption part 51 and flowing into the oxidation part 52. A drop in the oxidizing ability of the oxidation part 52 can therefore be suppressed.

In the present embodiment, an exhaust treatment device in which the adsorption part and the oxidation part are adjacent to each other is shown, but the invention is not limited to this. The adsorption part and the oxidation part may also be separated from each other. For example, other members may be arranged between the adsorption part and the oxidation part.

FIG. 8 shows an enlarged schematic cross-sectional view of a third exhaust treatment device in the present embodiment. The third exhaust treatment device is comprised of a base member 55 which is formed by cordierite etc. on the surface of which is formed a coating layer which contains a carrier 60 which is formed by aluminum oxide etc. and zeolite particles 61. The zeolite particles 61 include at least one zeolite among beta zeolite which carries silver by ion exchange and ZSM-5 which carries silver by ion exchange. The carrier 60 carries catalyst particles 62 which are formed by a metal having an oxidation function. In this way, the adsorption part and the oxidation part may be integrally formed.

Next, examples of the exhaust purification systems of an internal combustion engine in the present invention will be explained.

### Examples

In the following examples and comparative examples, as the zeolite which is contained in the adsorption part, beta zeolite, ZSM-5, and ferrierite are used. Further, zeolite on which ion exchange is not performed, zeolite which carries silver by ion exchange, and zeolite which carries iron by ion exchange are used for the tests.

In the examples and comparative examples, the method for using ion exchange to make the zeolite carry silver or iron was as follows:

### (Formation of Zeolite Which Carries Silver by Ion Exchange)

In the process of using ion exchange to have silver be carried on zeolite, 9.8 g of AgNO₃ was dissolved and sufficiently stirred in 1 liter of pure water. After that, 150 g of zeolite with a molar ratio of SiO₂/Al₂O₃ of about 40 was added and stirred. Following this, the mixture was heated and stirred at 80°C for 24 hours. Next, the result was filtered and washed by 1 liter of pure water repeatedly five times, then was dried at 120°C for 5 hours. After this, the result was fired at 550°C for 5 hours to thereby produce zeolite carrying silver.

### (Formation of Zeolite Which Carries Iron by Ion Exchange)

In the process of using ion exchange to have iron be carried on zeolite, 9.4 g of FeCl₃ was dissolved and sufficiently stirred in 1 liter of pure water. After that, 150 g of zeolite with a molar ratio of SiO₂/Al₂O₃ of about 40 was added. This was stirred while using hydrochloric acid to adjust the pH to about 2. Following this, the mixture was heated and stirred at 80°C for 24 hours. Next, the result was filtered and washed by 1 liter of pure water repeatedly five times, then was dried at 120°C for du hours. After this, the result was fired at 550°C for 5 hours to thereby produce zeolite carrying iron.

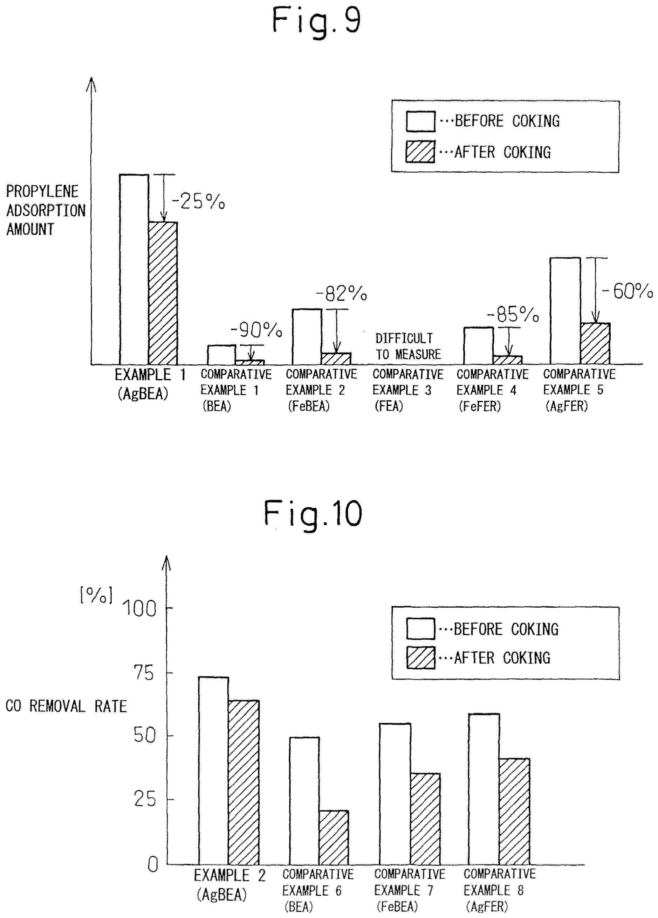

FIG. 9 is a graph of the amounts of adsorption of unburned hydrocarbons by the absorbent of Example 1 and adsorbents of comparative examples. The ordinate shows the amount of adsorption of propylene which has a strong effect of causing a drop in the removal rate of carbon monoxide of the oxidation part. In this test, the adsorbent of the first exhaust treatment device of the present embodiment (see FIG. 2 and FIG. 3) was used. Example 1 is an adsorbent which is provided with an adsorption part which contains beta zeolite which carries silver by ion exchange. Further, the comparative examples are adsorbents which are provided with adsorption parts which contain other zeolites.

In the examples and comparative examples, the method of using the respective zeolites to produce the adsorbent was as follows:

### (Production of Adsorbent)

Zeolite on which ion exchange was performed or zeolite on which ion exchange was not performed was used to coat zeolite on the surface of a base member having a plurality of flow paths. First, 150 g of zeolite powder and 375 g of alumina sol with an alumina content of 10% were mixed and stirred with pure water to prepare a slurry. This slurry was uniformly coated on a honeycomb structure base member formed by cordierite. After this, the result was dried at 120°C for 2 hours, then fired at 550°C for 1 hour. At this time, the slurry was coated to give amounts of coating per 1 liter honeycomb structure base member of 60 g of zeolite and 15 g of alumina.

The adsorbent of Example 1 and the adsorbents of the comparative examples were as follows:

### (Example 1)

The adsorbent of Example 1 contained, with respect to 1 liter of base member, 60 g of beta zeolite (BEA) carrying Ag (4 wt%) by ion exchange and 15 g of alumina.

### (Comparative Example 1)

The adsorbent of Comparative Example 1 contained, with respect to 1 liter of base member, 60 g of beta zeolite (BEA) and 15 g of alumina.

### (Comparative Example 2)

The adsorbent of Comparative Example 2 contained, with respect to 1 liter of base member, 60 g of beta zeolite (BEA) carrying Fe (4 wt%) by ion exchange and 15 g of alumina.

### (Comparative Example 3)

The adsorbent of Comparative Example 3 contained, with respect to 1 liter of base member, 60 g of ferrierite (FER) and 15 g of alumina.

### (Comparative Example 4)

The adsorbent of Comparative Example 4 contained, with respect to 1 liter of base member, 60 g of ferrierite (FER) carrying Fe (4 wt%) by ion exchange and 15 g of alumina.

### (Comparative Example 5)

The adsorbent of Comparative Example 5 contained, with respect to 1 liter of base member, 60 g of ferrierite (FER) carrying Ag (4 wt%) by ion exchange and 15 g of alumina.

The respective adsorbent were subjected to engine bench tests to cause coking at the adsorption parts. In the engine bench tests, a diesel engine with a displacement of 2.2 liters was used. The operating conditions at which coking occurred were an engine speed of 1600 rpm, a fuel injection amount of 15.2 (mm³/st), an air amount of 16 (g/sec), a temperature of the exhaust which flows into the adsorbent of 250°C, and a concentration of hydrocarbons which flow into the adsorbent of 280 (ppmC). The engine was operated continuously for 1 hour under these operating conditions to cause coking at the adsorption parts.

The adsorbents before coking occurred and the adsorbents after coking occurred were used to measure the amounts of adsorption of propylene. The graph shows the results before conducting engine bench tests and the results after conducting engine bench tests. When measuring the amounts of adsorption of propylene after coking, the absorbents were raised in temperature in a nitrogen atmosphere to 400°C so as to remove the adsorbed unburned hydrocarbons. In measuring the amounts of adsorption of propylene, under temperature conditions of 150°C, model gas containing propylene, carbon monoxide, nitrogen, nitric monoxide, etc. was run through the adsorbents and the amounts of adsorption of propylene were measured.

It was learned that the absorbents after coking occurred fell in amounts of adsorption of propylene compared with the adsorbents before coking occurred. In the adsorbents of Comparative Example 1 to Comparative Example 5, the rates of drop in the amounts of adsorption of propylene were 60% to 90%. As opposed to this, in the adsorbent of Example 1, the rate of drop in the amount of adsorption of propylene was 25%. It is learned that, compared with the adsorbents of Comparative Example 1 to Comparative Example 5, the rate of drop in the amount of adsorption due to coking was extremely small.

Further, even when comparing the amount of adsorption of propylene, it is learned that the adsorbent of Example 1 had a much larger amount of adsorption of propylene compared with the adsorbents of Comparative Example 1 to Comparative Example 5. In particular, it is learned that the adsorbent of Example 1 had a much larger amount of adsorption of propylene both before coking and after coking compared with the adsorbents of the comparative examples.

In this way, it is learned that an adsorption part which contains beta zeolite which carries silver by ion exchange is extremely excellent in adsorption performance. It is learned that even when coking occurs, the drop in adsorption performance is extremely small.

Next, the oxidation functions of the oxidation parts of the exhaust treatment devices were tested. Tests were conducted to measure the rates of removal of carbon monoxide of the oxidation parts before coking occurred at the adsorption parts and after coking occurred.

FIG. 10 is a graph of the rates of removal of carbon monoxide of the exhaust treatment device of an example and the exhaust treatment devices of comparative examples. In the tests, the second exhaust treatment device of the present embodiment (FIG. 7) was used. That is, an exhaust treatment device comprised of a base member on the surface of which an oxidation part and an adsorption part were stacked was used. Example 2 is an exhaust treatment device which is provided with an adsorption part which contains beta zeolite which carries silver by ion exchange, while the comparative examples are exhaust treatment devices which are provided with adsorption parts which contain other zeolite.

Multilayer type exhaust treatment devices were produced as follows for the example and comparative examples.

### (Production of Multilayer Exhaust Treatment Device)

In the process of formation of the oxidation part, 60 g of alumina powder and 375 g of alumina sol with an alumina content of 10% were mixed and stirred in pure water to prepare a slurry. This slurry was uniformly coated on a honeycomb structure base member formed by cordierite. After this, the result was dried at 120°C for 2 hours, then fired at 550°C for 1 hour. At this time, the slurry was coated to give amounts of coating per 1 liter base member of 75 g of alumina.

Next, the above base member was immersed in an aqueous solution containing platinum Pt and palladium Pd using a diammine dinitro platinum aqueous solution and palladium nitrate. Next, this was dried at 120°C for 2 hours, then fired at 550°C for 1 hour. As a result, 1.2 g of platinum and 0.6 g of palladium were carried per 1 liter of honeycomb structure base member. The oxidation part was formed in this way.

Next, the adsorption part was formed on the surface of the oxidation part. In the process of formation of the adsorption part, 150 g of zeolite powder and 375 g of alumina sol with an alumina content of 10% were mixed and stirred in pure water to prepare a slurry. This slurry was uniformly coated on the above base member, was dried at 120°C for 2 hours, then was fired at 550°C for 1 hour. At this time, the top layer was coated to give amounts of coating per 1 liter honeycomb structure base member of 60 g of zeolite and 15 g of alumina.

The exhaust treatment device of Example 2 and the exhaust treatment devices of the comparative examples were as follows.

### (Example 2)

The adsorption part of the exhaust treatment device of Example 2 contained, with respect to 1 liter of base member, 60 g of beta zeolite (BEA) carrying Ag (4 wt%) by ion exchange and 15 g of alumina.

### (Comparative Example 6)

The absorption part of the exhaust treatment device of Comparative Example 6 contained, with respect to 1 liter of base member, 60 g of beta zeolite (BEA) and 15 g of alumina.

### (Comparative Example 7)

The adsorption part of the exhaust treatment device of Comparative Example 7 contained, with respect to 1 liter of base member, 60 g of beta zeolite (BEA) carrying Fe (4 wt%) by ion exchange and 15 g of alumina.

### (Comparative Example 8)

The adsorption part of the exhaust treatment device of Comparative Example 8 contained, with respect to 1 liter of base member, 60 g of ferrierite (FER) carrying Ag (4 wt%) by ion exchange and 15 g of alumina.

The operating conditions for causing coking at the adsorption parts were similar to the above-mentioned engine bench tests. In measurement of the rate of removal of carbon monoxide, the rate of removal when conducting a transitory test simulating a driving pattern in the engine bench tests was measured.

From the graph which is shown in FIG. 10, it is learned that the exhaust treatment device of Example 2 has a much smaller rate of drop of rate of removal of carbon monoxide than the exhaust treatment devices of Comparative Example 6 to Comparative Example 8. Further, it is learned that the exhaust treatment device of Example 2 has a rate of removal of carbon monoxide much better than the exhaust treatment devices of Comparative Example 6 to Comparative Example 8 both before coking and after coking.

In this way, by employing beta zeolite which carries silver by ion exchange as the absorption part which adsorbs unburned hydrocarbons, it is possible to suppress the drop in the adsorption performance due to coking and therefore possible to suppress the drop in the oxidation function of the oxidation part.

Next, an example of an exhaust treatment device which is provided with an absorption part which contains ZSM-5 which carries silver by ion exchange will be explained.

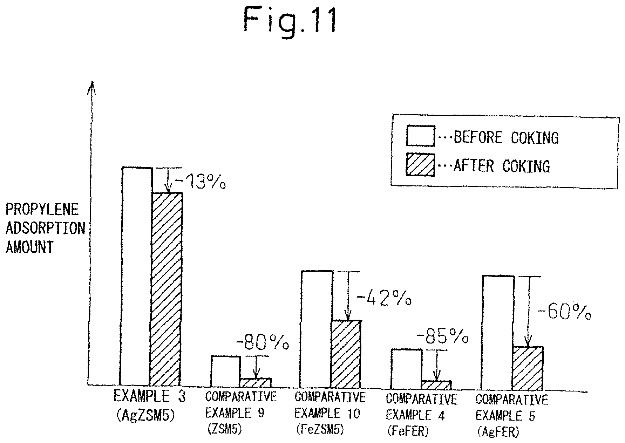

FIG. 11 is a graph of the amounts of adsorption of unburned hydrocarbons by an adsorbent of Example 3 and adsorbents of comparative examples. In these tests, the adsorbent of the first exhaust treatment device of the present embodiment (see FIG. 2 and FIG. 3) was used. Example 3 is an adsorbent which is provided with an adsorption part which contains ZSM-5 which carries silver by ion exchange. The comparative examples are adsorbents which are provided with adsorption parts which contain other zeolites. The adsorbents were produced by the above-mentioned methods.

The adsorbent of Example 3 and the adsorbents of Comparative Examples 9 and 10 were as follows.

### (Example 3)

The adsorbents of Example 3 contained, with respect to 1 liter of base member, 60 g of ZSM-5 (ZSM5) carrying Ag (4 wt%) by ion exchange and 15 g of alumina.

### (Comparative Example 9)

The adsorbent of Comparative Example 9 contained, with respect to 1 liter of base member, 60 g of ZSM-5 (ZSM5) and 15 g of alumina.

### (Comparative Example 10)

The adsorbent of Comparative Example 10 contained, with respect to 1 liter of base member, 60 g of ZSM-5 (ZSM5) carrying Fe (4 wt%) by ion exchange and 15 g of alumina.

FIG. 11 shows the results for an adsorbent which contains ferrierite which carries iron by ion exchange of Comparative Example 4 and an adsorbent which contains ferrierite which carries silver by ion exchange of Comparative Example 5 for comparison.

Regarding the respective adsorbents, in the same way as in Example 1, engine bench tests were used to circulate the exhaust and cause coking at the adsorption parts. Further, in the same way as in Example 1, model gas including propylene was used to measure the amounts of adsorption of propylene for absorbents before causing coking and adsorbents after causing coking.

It is learned that Comparative Example 9, Comparative Example 10, Comparative Example 4, and Comparative Example 5 had rates of drop of amount of propylene adsorption due to coking of the adsorbent of 85% to 42%. As opposed to this, it is learned that Example 3 had a rate of drop of amount of propylene adsorption due to coking of the adsorbent of 13% and much smaller than the adsorbents of the comparative examples. Further, it is learned that the adsorbent of Example 3 has a much larger amount of propylene adsorption before coking and amount of propylene adsorption after coking compared with the adsorbents of Comparative Example 9, Comparative Example 10, Comparative Example 4, and Comparative Example 5.

In this way, by employing an adsorption part which contains ZSM-5 which carries silver by ion exchange, it is possible to provide an adsorbent which greatly suppresses the drop in adsorption performance due to coking. Further, since it is possible to suppress the drop in adsorption performance due to coking, it is possible to suppress the drop in oxidation performance of the oxidation part.

In the above embodiments and examples, as a compression ignition type of internal combustion engine, a diesel engine which is mounted in a vehicle was explained as an example, but the invention is not limited to this. The present invention can be applied to any compression ignition type of internal combustion engine.

The above embodiments can be suitably combined. In the above-mentioned figures, the same or corresponding parts are assigned the same reference signs. Note that the above embodiments are illustrative and do not limit the inventions. Further, in the embodiments, changes covered the claims are intended.

### Reference Signs List

- 1: engine body
- 2: combustion chamber
- 13: exhaust treatment device
- 13a: adsorbent
- 13b: oxidation catalyst
- 51: adsorption part
- 52: oxidation part
- 55: base member
- 60: carrier
- 61: zeolite particles
- 62: catalyst particles
- 63: acid point
- 64: zeolite

## Claims

1. A compression ignition type internal combustion engine, comprising:
an engine body;
an exhaust purification device including an adsorption part (51) which adsorbs hydrocarbons which are contained in exhaust at less than a release temperature and which releases adsorbed hydrocarbons when the temperature reaches the release temperature or more, and an oxidation part (52) which oxidizes the hydrocarbons which are released from the adsorption part; and
an electronic control unit controlling the engine body;
wherein the electronic control unit is configured to control the engine body so as to have, in ordinary operation of the internal combustion engine, periods during which a temperature of the adsorption part is maintained in a first temperature range where the hydrocarbons which are adsorbed at the adsorption part undergo coking for a time required for coking to occur in ordinary operation of the internal combustion engine,
and periods where a temperature of the adsorption part is maintained at a second temperature range which is higher than the first temperature range; and
the adsorption part includes at least one type of zeolite (64) among beta zeolite which carries silver by ion exchange and ZSM-5 which carries silver by ion exchange.

2. The compression ignition type internal combustion engine as set forth in claim 1, wherein an upper limit temperature of the first temperature range is less than approximately 400°C and a lower limit temperature of the second temperature range is approximately 400°C or more.

3. The compression ignition type internal combustion engine as set forth in claim 1 or 2, wherein the oxidation part (52) is arranged in an engine exhaust passage at a downstream side from the adsorption part (51).

4. The compression ignition type internal combustion engine as set forth in claim 1, wherein
the adsorption part and the oxidation part are stacked on a surface of a base member (55), and
the oxidation part and the adsorption part are stacked from the surface of the base member toward a flow path of the exhaust in the order of the oxidation part and the adsorption part.

## Patentansprüche

1. Verbrennungsmotor mit Kompressionszündung umfassend:
einen Motorkörper;
eine Abgasreinigungsvorrichtung mit einem Adsorptionsteil (51), das bei weniger als einer Freisetzungstemperatur Kohlenwasserstoffe adsorbiert, die im Abgas enthalten sind, und das adsorbierte Kohlenwasserstoffe freisetzt, wenn die Temperatur die Freisetzungstemperatur erreicht oder übersteigt, und einem Oxidationsteil (52), das die von dem Adsorptionsteil freigesetzten Kohlenwasserstoffe oxidiert; und
eine elektronische Steuereinheit, die den Motorkörper steuert;
wobei die elektronische Steuereinheit konfiguriert ist, den Motorkörper so zu steuern, dass bei einem gewöhnlichen Betrieb des Verbrennungsmotors Perioden vorhanden sind, während denen eine Temperatur des Adsorptionsteils in einem ersten Temperaturbereich gehalten wird, in dem die Kohlenwasserstoffe, die an dem Adsorptionsteil adsorbiert sind, einem Verkoken unterliegen, während eines für das Auftreten eines Verkokens bei einem gewöhnlichen Betrieb des Verbrennungsmotors erforderlichen Zeitraums,
und Perioden, bei denen eine Temperatur des Adsorptionsteils auf einem zweiten Temperaturbereich gehalten wird, der höher als der erste Temperaturbereich ist; und
der Adsorptionsteil mindestens einen Typ an Zeolith (64) aus beta-Zeolith, der durch Ionenaustausch Silber trägt, und ZSM-5, der durch Ionenaustausch Silber trägt, einschließt.

2. Verbrennungsmotor mit Kompressionszündung nach Anspruch 1, wobei eine obere Grenztemperatur des ersten Temperaturbereichs weniger als ungefähr 400 °C beträgt und eine untere Grenztemperatur des zweiten Temperaturbereichs ungefähr 400 °C oder mehr beträgt.

3. Verbrennungsmotor mit Kompressionszündung nach Anspruch 1 oder 2, wobei das Oxidationsteil (52) in einem Motorabgaskanal auf einer stromabwärts liegenden Seite des Adsorptionsteils (51) angeordnet ist.

4. Verbrennungsmotor mit Kompressionszündung nach Anspruch 1, wobei
das Adsorptionsteil und das Oxidationsteil auf einer Oberfläche eines Basisbauteils (55) gestapelt sind, und
das Oxidationsteil und das Adsorptionsteil von der Oberfläche des Basisbauteils in Richtung eines Strömungswegs des Abgases in der Reihenfolge Oxidationsteil und Adsorptionsteil gestapelt sind.

## Revendications

1. Moteur à combustion interne du type à allumage par compression, comportant :
un corps de moteur ;
un dispositif de purification d'échappement comprenant une partie d'adsorption (51) qui adsorbe des hydrocarbures qui sont contenus dans l'échappement en dessous d'une température de libération et qui libère des hydrocarbures adsorbés quand la température atteint la température de libération ou plus, et une partie d'oxydation (52) qui oxyde les hydrocarbures qui sont libérés par la partie d'adsorption ; et
une unité de commande électronique qui commande le corps de moteur ;
dans lequel l'unité de commande électronique est configurée pour commander le corps de moteur de façon à avoir, dans un fonctionnement normal du moteur à combustion interne, des périodes pendant lesquelles une température de la partie d'adsorption est maintenue dans une première plage de températures où les hydrocarbures qui sont adsorbés dans la partie d'adsorption subissent une cokéfaction pendant un temps nécessaire pour que la cokéfaction se produise dans un fonctionnement normal du moteur à combustion interne,
et des périodes où une température de la partie d'adsorption est maintenue dans une deuxième plage de températures qui est plus élevée que la première plage de températures ; et
la partie d'adsorption comprend au moins un type de zéolite (64) parmi la bêta zéolite qui porte de l'argent par échange ionique et ZSM-5 qui porte de l'argent par échange ionique.

2. Moteur à combustion interne du type à allumage par compression selon la revendication 1, dans lequel une température de limite supérieure de la première plage de températures est en dessous d'environ 400°C et une température de limite supérieure de la deuxième plage de températures est environ de 400°C ou plus.

3. Moteur à combustion interne du type à allumage par compression selon la revendication 1 ou 2, dans lequel la partie d'oxydation (52) est disposée dans un passage d'échappement de moteur sur un côté en aval par rapport à la partie d'adsorption (51).

4. Moteur à combustion interne du type à allumage par compression selon la revendication 1, dans lequel
la partie d'adsorption et la partie d'oxydation sont empilées sur une surface d'un élément de base (55), et
la partie d'oxydation et la partie d'adsorption sont empilées depuis la surface de l'élément de base vers un passage d'écoulement de l'échappement dans l'ordre de la partie d'oxydation et de la partie d'adsorption.
